# EUROPÄISCHE PATENTSCHRIFT

(11) **EP 3 208 054 B1**
(45) Veröffentlichungstag und Bekanntmachung des Hinweises auf die Patenterteilung: **16.12.2020**
(21) Anmeldenummer: 17155398.5
(22) Anmeldetag: 09.02.2017
(51) Int. Cl.: B25J 17/00, B25J 19/02, B25J 9/12, H02K 7/116, H02K 11/215

(54) **ROBOTERGELENKANTRIEB MIT ENCODER**
ROBOT JOINT DRIVE HAVING AN ENCODER
ENTRAÎNEMENT D'ARTICULATION DE ROBOT AVEC CODEUR

(30) Priorität: 22.02.2016 DE 202016001164 U
(43) Veröffentlichungstag der Anmeldung: 23.08.2017
(73) Patentinhaber: maxon international ag, 6072 Sachseln (CH)
(72) Erfinder: SCHWARZ, Volker, 6074 Giswil (CH); BONGUGLIELMI, Luca, 6072 Sachseln (CH); RISSLER, Alexander, 79350 Sexau (DE); FISCHER, Simon, 79183 Waldkirch (DE)
(74) Vertreter: Grünecker Patent- und Rechtsanwälte PartG mbB

(56) Entgegenhaltungen:
- CA-A1- 2 940 490
- CN-U- 201 456 003
- US-A1- 2010 101 346
- US-A1- 2014 298 939
- US-B1- 6 258 007

## Beschreibung

Die Erfindung betrifft einen Robotergelenkantrieb mit einem stationären Gehäuse, einem relativ zum stationären Gehäuse drehbaren Abtriebsteil, einem Elektroantriebsmotor und einem Getriebe, wobei die Antriebswelle des Elektroantriebsmotors über das Getriebe mit einer Abtriebswelle des drehbaren Abtriebsteils gekoppelt ist, um das Abtriebsteil relativ zum stationären Gehäuse zu drehen. Des Weiteren betrifft die Erfindung einen Roboter, insbesondere einen Humanoid-Roboter, mit einem solchen Robotergelenkantrieb.

Robotergelenkantriebe werden bereits in großer Stückzahl in automatisierten Fertigungen in der Industrie- und Medizintechnik, aber auch für Humanoid-Roboter, Industrie-Roboter und bei Robotic-Anwendungen in der Raumfahrt genutzt. Sowohl bei automatisierten Fertigungsanlagen als auch bei Humanoid-Robotern werden eine Vielzahl von Verbindungen zwischen den einzelnen Komponenten benötigt, die unterschiedliche Formen aufweisen und verschiedene Bewegungen ermöglichen. Insbesondere bei Humanoid-Robotern, die das Verhalten und die Bewegungen von Menschen reproduzieren, sind Verbindungen mit mehreren Freiheitsgraden sowie einer sicheren und genauen Positionierung notwendig. Die Bewegungen dieser Verbindungen werden mittels eines elektrischen Antriebsmotors durchgeführt, der entsprechend von einem Computerprogramm gesteuert wird.

Ein herkömmlicher Robotergelenkantrieb mit zwei schwenkbaren Verbindungen ist aus der US 2011/048158 A1 bekannt, wobei die Drehachsen in einem Winkel zueinander angeordnet sind. Die beiden Verbindungen werden jeweils von einem separaten Elektroantriebsmotor angetrieben, wobei die Bewegung der Motoren von einem zugeordneten Untersetzungsgetriebe auf ein drehbares Abtriebsteil übertragen wird. Dabei ist der Antriebsmotor der zweiten Verbindung auf dem letzten Zahnrad des Stirnradgetriebes der ersten Verbindung angeordnet. Die US 2010/108346 A1 beschreibt ein weiteres Robotergelenk mit einem Steuersystem und einem an dem Gehäuse des Robotergelenks angebrachten Drehpositionssensor. Einen Robotergelenkantrieb mit Elektromotor und Getriebestufe sowie einem an dem Motor angeflanschten Untersetzungsgetriebe zeigt die US 2014/298939 A1, wobei eine sich durch das Getriebe erstreckende Sensorwelle auf einer Sensorplatte gelagert ist. Die US 6,258,007 B1 betrifft einen weiteren Robotergelenkantrieb, bei dem auf der sich durch die hohlzylindrische Motorwelle hindurch erstreckenden Abtriebswelle ein Output-Encoder am Wellenumfang angeordnet ist. Die CA 2940490 A1 beschreibt ebenfalls ein Robotergelenk zur Verbindung zweier Roboterarmabschnitte, wobei auf einem sich radial erstreckenden Flansch an der Antriebswelle eine Encoderscheibe montiert ist. Die CN 201 456 003 U offenbart ein Prothesen- und Robotergelenk, bei der eine mit dem Elektromotor verbundene Abtriebswelle, die sich durch eine Hohlwelle und den Motor erstreckt, am freien stirnseitigen Ende einen Positionssensor aufweist.

Beim Betrieb des Robotergelenks ist die exakte Bewegung und genaue Positionierung des Abtriebsteils von großer Bedeutung, sowohl für die Sicherheit der sich in der Nähe der Roboter aufhaltenden Personen als auch für die Arbeitsprozesse selbst. Die genaue Positionierung des Abtriebsteils verhindert beim Ablauf der einzelnen Arbeitsschritte eine Nachjustierung der Position des Abtriebsteils. Dadurch werden im Betrieb nicht nur Fehler vermieden, sondern auch die Geschwindigkeit der Arbeitsabläufe erhöht.

Mit der fortschreitenden technischen Entwicklung im Bereich der industriellen Automatisierung und der Robotertechnik steigen auch die Anforderungen an die hierbei eingesetzten Robotergelenke. Neben der sicheren Funktion und dem störungsfreien Betrieb von Robotergelenkantrieben ergibt sich im Rahmen der Innovation die Anforderung, bestehende Konzepte zu vereinfachen sowie die Funktionsweise und Positionierung des Gelenkantriebs zu verbessern.

Es ist daher die Aufgabe der vorliegenden Erfindung, einen eingangs genannten Robotergelenkantrieb mit einem möglichst konstruktiv einfachen Aufbau und einer sicheren Funktion bereitzustellen.

Diese Aufgabe wird mit einem gattungsgemäßen Robotergelenkantrieb erfindungsgemäß durch die charakteristischen Merkmale des Anspruchs 1 gelöst,. Das freie Ende der Abtriebswelle erstreckt sich vom drehbaren Abtriebsteil in das Getriebe hinein in Richtung des Elektromotors, bevorzugt mindestens um die Hälfte des Abstands zwischen dem Abtriebsteil und dem Elektroantriebsmotor, entsprechend der Dicke des Getriebes, bis in der Nähe des Encoders, ohne diesen zu berühren. Dies ermöglicht über die Anordnung des Geberelements am freien Ende der Abtriebswelle und in Abhängigkeit der Genauigkeit des eingesetzten Encoders eine einfache, verschleißfreie Bestimmung der Position des Abtriebsteils. Das Vorsehen einer gemeinsamen Motorleiterplatte mit einer Kommutierungssensorik und dem Encoder bietet eine kompakte Anordnung der gesamten Antriebssensorik auf der Motorleiterplatte und vermeidet zusätzliche Anschlüsse für den Encoder.

Insbesondere kann das Geberelement ein Magnet und der Encoder ein Magnetfeld-Encoder sein, wobei der Magnetfeld-Encoder mittels des Magnetfelds des Magnets am freien Ende der Abtriebswelle die Drehposition der Abtriebswelle bestimmt. Die Detektierung des Magnetfelds eines sich mit der Abtriebswelle drehenden Magneten, üblicherweise ein Dauermagnet, ermöglicht nicht nur eine einfache, kontaktlose Bestimmung der Drehposition des Abtriebsteils, sondern ermöglicht auch in Abhängigkeit der Genauigkeit des eingesetzten Magnetfeld-Encoders eine hohe Präzision der Positionsbestimmung des Abtriebsteils. Dabei ist der Magnet zweckmäßigerweise an dem freien Ende der Abtriebswelle angeordnet, das sich vom drehbaren Abtriebsteil in das Getriebe hinein in Richtung des Elektromotors erstreckt, und in der Nähe des Magnetfeld-Encoders positioniert, ohne diesen zu berühren. Um eine möglichst ungestörte Einwirkung des Magnetfelds auf den Magnetfeld-Encoder zu realisieren, ist zwischen dem Magneten und dem Magnetfeld-Encoder kein zusätzlicher induktiver Widerstand oder induktive Abschirmung durch Bauteile des Robotergelenkantriebs, beispielsweise Metallteile des stationären Gehäuses oder des Elektroantriebsmotors, vorhanden.

Günstigerweise kann der Magnetfeld-Encoder ein integrierter Hallsensorchip sein. Ein solcher Schaltkreis auf Hallsensor-Basis ermöglicht eine einfache und sichere Erfassung des Magnetfelds und Umwandlung in ein geeignetes Positionssignal. Alternativ kann als Magnetfeld-Encoder auch ein magnetoresistiver Encoder eingesetzt werden. Bevorzugt kann als integrierter Hallsensorchip ein 12 Bit-Mikrochip eingesetzt werden, insbesondere mit einer kreisförmigen Anordnung der Einzelsensoren zur genauen Erfassung der senkrechten Komponente des Magnetfelds, um eine möglichst hohe Genauigkeit der Positionsbestimmung des Abtriebsteils zu ermöglichen. Trotzdem ist ein solcher 12 Bit-Mikrochip ein verhältnismäßig kleines Bauteil, das in vielfältiger Weise in einem erfindungsgemäßen Robotergelenkantrieb angeordnet werden kann. Weiter ermöglicht ein solcher als 12 Bit-Mikrochip ausgebildeter Hallsensor eine Präzision der Positonsbestimmung von kleiner als 0,1°. Desweiteren kann ein solcher als Mikrochip ausgebildeter Encoder sehr einfach auf der Motorleiterplatte des Elektroantriebsmotors integriert werden. Mit dieser Anordnung kann eine zusätzliche Leiterplatte für den Magnetfeld-Encoder und dadurch auch ein zusätzlicher Anschluss an die Steuerelektronik eingespart werden. Die gesamte Antriebssensorik kann so kompakt auf einer Leiterplatte untergebracht sein, wodurch neben der Einsparung von Herstellkosten auch der notwendige Bauraum des Robotergelenkantriebs reduziert werden kann.

Eine zweckmäßige Ausgestaltung sieht vor, dass der Magnet ein diametral magnetisierter Scheiben- oder Zylindermagnet ist. Ein derartiger Scheiben- oder Zylindermagnet ermöglicht als Dauermagnet neben einem geeigneten permanenten Magnetfeld auch eine gute zentrale Anordnung des Magneten an der Stirnseite des freien Endes der Abtriebswelle und damit auch eine Positionierung des Encoders, entsprechend eines Magnetfeld-Encoders, in axialer Richtung der Abtriebswelle. Insbesondere ist vorgesehen, dass der Magnet und ein Magnetfeld-Encoder konzentrisch zur Drehachse der Antriebswelle angeordnet sind.

In einer anderen Ausgestaltung kann das Geberelement eine induktionsändernde Massverkörperung und der Encoder ein induktiver Encoder sein, wobei der induktive Encoder mittels der sich ändernden Induktivität durch die Massverkörperung am freien Ende der Abtriebswelle die Drehposition der Abtriebswelle bestimmt. Die Detektierung der von einer oder mehreren Spulen erzeugten Induktivität durch einen sich mit der Abtriebswelle drehenden Massverkörperung ermöglicht eine gegenüber rauhen Umgebungsbedingungen und anderen Magnetfeldern unempfindliche, kontaktlose Bestimmung der Drehposition des Abtriebsteils. Für eine temperaturunabhängige Bestimmung der Drehposition des Abtriebsteils kann die Massverkörperung aus einem nicht magnetischen Metall, insbesondere Kupfer oder Aluminium, bestehen und der induktive Encoder ein wirbelstrombasierter induktiver Encoder sein. Durch den Einsatz einer Struktur aus einem nicht magnetischen, gut leitendem Metall, beispielsweise Kupfer oder Aluminium, kann diese Massverkörperung mit einem Hochfrequenzfeld bestrahlt werden, insbesondere mit einer Anregungsfrequenz im MHz-Bereich, um einen guten Kontrast zwischen Luft und Metall zu erzeugen. Eine solche Hochfrequenz als Anregungsfrequenz ermöglicht nicht nur den Einsatz sehr dünner Metallschichten als Massverkörperung, sondern verhindert auch eine Störung durch übliche Pulsweitenmodulations-Frequenzen.

Alternativ zu Magnetfeld-Encodern oder induktiven Encodern können für einen erfindungsgemäßen Robotergelenkantrieb auch optische oder kapazitive Encoder mit entsprechenden Geberelementen eingesetzt werden.

Um das nicht mit dem Abtriebsteil verbundene freie Ende der Abtriebswelle möglichst weit in das Getriebe in Richtung des Elektroantriebsmotors, bevorzugt bis kurz vor dem Elektroantriebsmotor, erstrecken zu lassen, können die Antriebswelle des Elektroantriebsmotors und die Abtriebswelle des Abtriebsteils versetzt zueinander angeordnet sein.

Eine bevorzugte Ausführungsform sieht vor, dass das Getriebe ein Stirnradgetriebe ist, insbesondere ein mehrstufiges Stirnradgetriebe ist. Ein Stirnradgetriebe ermöglicht dem freien Ende der Abtriebswelle, sich relativ einfach in die Getriebeeinrichtung des Elektroantriebsmotors hinein zu erstrecken, ohne die eigentlichen Übersetzungsanforderungen des Getriebes zu beeinflussen. Dabei ermöglicht ein mehrstufiges Stirnradgetriebe, insbesondere ein vierstufiges Stirnradgetriebe, eine hohe Untersetzung und sichere Übertragung der Antriebsbewegung und trotzdem kann das freie Ende der Antriebswelle sich bis tief ins Getriebe erstrecken und sogar direkt bis zum stationären Gehäuse bzw. dem mit dem Gehäuse verbundenen Elektroantriebsmotor reichen. Für eine bessere Übertragung der Drehbewegung auf das Abtriebsteil kann das mit der Abtriebswelle gekoppelte Zahnrad des Stirnradgetriebes ein Hohlrad oder Teilhohlrad sein. Dies erhöht nicht nur die Möglichkeiten der getriebetechnischen Übersetzung des Stirnradgetriebes sondern ermöglicht auch einen einfachen konstruktiven Aufbau.

Eine weitere Ausbildung sieht vor, dass der Elektroantriebsmotor ein Außenläufermotor ist. Ein Außenläufermotor ermöglicht neben der einfachen Integration in das stationäre Gehäuse auch einen möglichst einfachen Aufbau der Feststellbremse zur Fixierung des Robotergelenkantriebs bei einem Stromausfall oder einer Fehlfunktion des Robotergelenks. Ein Außenläufermotor bietet dabei den Einsatz von außen am Umfang des Rotors anliegenden Bremsarmen, die bei einer Unterbrechung der Stromversorgung von einer Vorspanneinrichtung sicher an den Rotor gedrückt werden.

In einer sinnvollen Ausführung kann die Kommutierungssensorik drei digitale Hallsensoren zur Erfassung des Magnetfelds der Rotormagneten des Elektroantriebsmotors aufweisen, wobei auch der Encoder zur Bestimmung der Drehposition der Abtriebswelle auf der Motorleiterplatte angeordnet ist. Durch die Verwendung von digitalen Hallsensoren zur Erfassung des Magnetfelds der Rotormagneten des Elektroantriebsmotors kann, insbesondere in Verbindung mit einem als Mikrochip ausgebildeten Magnetfeld-Encoders zur Bestimmung der Drehposition der Abtriebswelle, eine flache Motorleiterplatte realisiert werden, die den notwendigen Bauraum des Elektroantriebsmotors und damit die Größe des Robotergelenkantriebs reduziert. Der Einsatz eines induktiven Encoders und einer am Ende der Abriebswelle vorgesehenen Massverkörperung kann die Störeinflüsse der Rotormagneten und von Temperaturänderungen auf die Bestimmung der Drehposition reduzieren und gleichzeitig die Anordnung auf kleinstem Bauraum auf der gemeinsamen Motorleiterplatte ermöglichen.

Eine vorteilhafte Ausführungsform sieht vor, dass der Elektroantriebsmotor einen antriebsseitigen Flansch aufweist, wobei der Flansch eine axial zur Abtriebswelle fluchtende Öffnung aufweist. Der antriebsseitige Motorflansch des Elektroantriebsmotors ermöglicht eine einfache Befestigung des Elektroantriebsmotors an dem stationären Gehäuse. Zur Verhinderung einer induktiven Abschirmung des Magnetfelds des am freien Ende der Abtriebswelle vorgesehenen Magneten, entsprechend für die Erzeugung eines unbehinderten Magnetfelds und Detektierung des Magnetfelds durch den Magnetfeld-Encoder, bzw. für eine freie Wirkung einer Massverkörperung auf einen induktiven Encoder, weist der Flansch eine axial zur Abtriebswelle fluchtende Öffnung auf, die das Induktionsfeld ungehindert durch den abtriebsseitigen Flansch hindurch lässt. Dies ermöglicht die Anordnung des Magnetfeld-Encoders, bzw. des induktiven Encoders, auf der dem Getriebe abgewandten Seite des Flansches und damit trotz eines stabilen Motorflansches die Anordnung des Encoders auf einer zwischen dem Flansch und dem Rotor angeordneten flachen Motorleiterplatte mit Kommutierungssensoren.

Desweiteren bezieht sich die Erfindung auf einen Roboter, insbesondere auf einen Humanoid-Roboter, mit mindestens einem der oben beschriebenen Robotergelenkantriebe mit einem Encoder, bevorzugt einem Magnetfeld-Encoder oder einem induktivem Encoder, der bevorzugt mittels eines am freien Ende der Abtriebswelle angeordneten Geberelements die Drehposition der Abtriebswelle bestimmt.

Im Folgenden wird ein Ausführungsbeispiel der vorliegenden Erfindung anhand von Zeichnungen näher erläutert. Dabei zeigt:
- Figur 1: eine perspektivische Draufsicht auf einen erfindungsgemäßen Robotergelenkantrieb,
- Figur 2: eine perspektivische Rückseitenansicht auf den Robotergelenkantrieb aus Figur 1 und
- Figur 3: eine freigeschnittene perspektivische Ansicht des Robotergelenkantriebs aus Figur 1

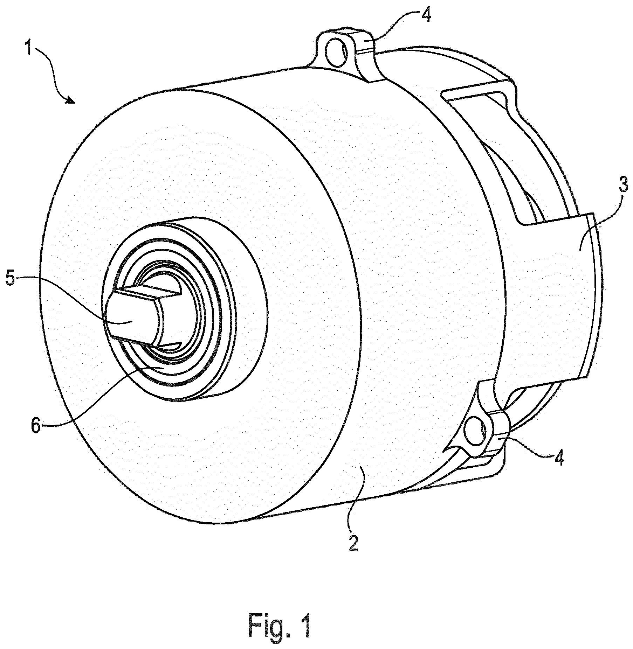

Ein erfindungsgemäßer Robotergelenkantrieb 1 für die Verwendung in automatisierten Fertigungen oder in Humanoid-Robotern ist in Figur 1 dargestellt. Der Robotergelenkantrieb 1 umfasst ein stationäres Gehäuse 2, das an der Rückseite mit einem Gehäusedeckel 3 abgeschlossen ist, wobei am Übergang zwischen stationärem Gehäuse 2 und Gehäusedeckel 3 am stationären Gehäuse 2 mehrere Befestigungslaschen 4 vorgesehen sind. An der Stirnseite des stationären Gehäuses 2 tritt ein Abtriebsteil 5 aus, das gegenüber dem stationären Gehäuse 2 drehbar in einem Lager 6 gelagert ist. Das Lager 6 ist in einem stirnseitigen Vorsprung des stationären Gehäuses 2 angeordnet. Das Abtriebsteil 5 ist seitlich abgeflacht, um weitere Bauteile der angetriebenen Gelenkseite zu befestigen.

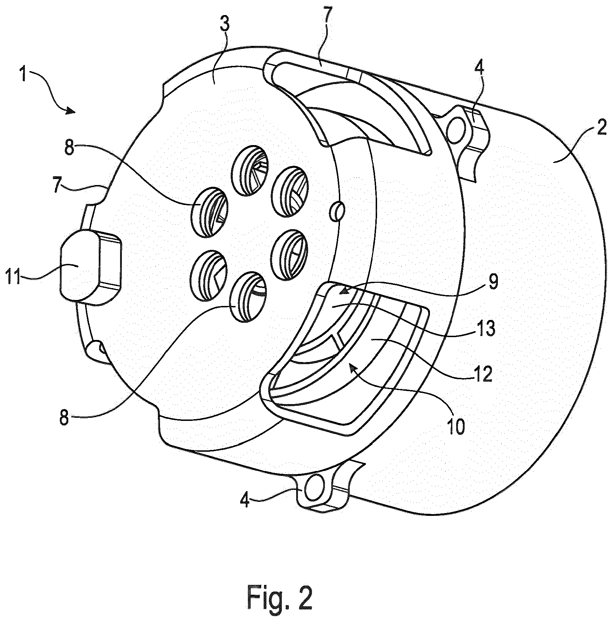

An der in Figur 2 gezeigten Rückseite des erfindungsgemäßen Robotergelenkantriebs 1 aus Figur 1 ist der Gehäusedeckel 3 im Detail zu erkennen. Der Gehäusedeckel 3 weist seitliche Ausschnitte 7 und sechs stirnseitig, ringförmig angeordnete Bohrungen 8 zur Belüftung des von dem Gehäusedeckel 3 abgedeckten Elektroantriebsmotors 9 auf. Durch die seitlichen Ausschnitte 7 ist ein Teil der Feststellbremse 10 zu erkennen, die von dem Aktuator 11 betätigt wird. Der Aktuator 11 zum Deaktivieren der Feststellbremse 10 ist auf der Oberseite des Gehäusedeckels 3 seitlich zum Elektronantriebsmotor 9 angeordnet. Der Aktuator 11 wirkt über ein Nockenelement (nicht gezeigt) auf den Hebelarm 12 der Festellbremse 10, um den Hebelarm 12 von der Umfangsfläche des Rotors 13 abzuheben und die Festellbremse 10 außer Funktion zu bringen. Der Elektroantriebsmotor 9 ist in dieser gezeigten Ausführungsform als Außenläufermotor ausgebildet, so dass die Feststellbremse 10 direkt auf den Rotor 13 des Elektroantriebsmotors 9 wirken kann.

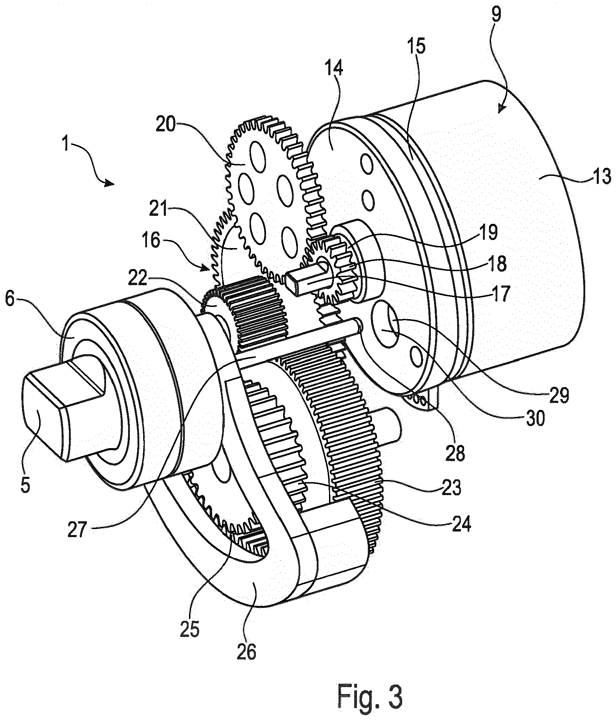

Figur 3 zeigt eine perspektivische Ansicht des freigeschnittenen Robotergelenkantriebs 1 ohne das stationäre Gehäuse 2, den Gehäusedeckel 3 und die Feststellbremse 10 mit Aktuator 11. Der Antriebsmotor 9 umfasst neben dem außenliegenden Rotor 13, an dessen Umfangsfläche der Hebelarm 12 der Feststellbremse 10 einwirkt, einen antriebsseitigen Motorflansch 14. Zwischen dem Rotor 13 und dem Motorflansch 14 ist eine flache Motorleiterplatte 15 vorgesehen, auf der die gesamte Antriebssensorik mit den für die Kommutierung des Elektroantriebsmotors notwendigen digitalen Hallsensoren zur Erfassung des Magnetfelds der Rotormagneten angeordnet ist. Auf der dem Getriebe 16 zugewandten Seite des Motorflansches 14 tritt die Antriebswelle 17 aus, die mittels eines Antriebsritzels 18 das Getriebe 16 antreibt. Die Antriebswelle 17 ist dabei in einem Motorlager 19 gelagert, das in einem stirnseitigen Vorsprung des Motorflansches 14 sitzt.

Das in Figur 3 gezeigte Getriebe 16 ist als vierstufiges Stirnradgetriebe ausgebildet mit drei Zahnrad-Zahnritzel-Paaren. Das direkt mit der Antriebswelle 17 verbundene Antriebsritzel 18 mit einer kleinen Zähneanzahl greift in der ersten Getriebestufe in ein Zahnrad 20 mit einer großen Zähneanzahl ein. Das Zahnrad 20 der ersten Getriebestufe ist fest mit einem weiteren Ritzel (nicht gezeigt) mit wenigen Zähnen verbunden, das auf der Rückseite des Zahnrads 20 in der zweiten Getriebestufe in ein weiteres Zahnrad 21 mit vielen Zähnen eingreift. Das Zahnrad 21 der zweiten Getriebestufe ist wiederum fest mit dem Zahnritzel 22 der dritten Getriebestufe verbunden, das in ein weiteres Zahnrad 23 mit einer großen Zähneanzahl der dritten Getriebestufe eingreift. Das Zahnrad 23 der dritten Getriebestufe ist über eine gemeinsame Achse fest mit dem Zahnritzel 24 der vierten Getriebestufe verbunden, das mit einer geringen Zähneanzahl in die Innenverzahnung 25 eines Teilhohlrads 26 eingreift. Das Teilhohlrad 26 ist fest mit der Abtriebswelle 27 verbunden, die zentrisch zur Innenverzahnung 25 des Teilhohlrads 26 ausgerichtet ist.

Die Abriebswelle 27 erstreckt sich koaxial zu dem Abtriebsteil 5 vom Zahnrad 21 der zweiten Getriebestufe und dem Zahnrad 20 der ersten Getriebestufe vorbei bis in die Nähe des Motorflansches 14. Am dem Abtriebsteil 5 abgewandten freien Ende der Abtriebswelle 27 ist ein Magnet 28 angeordnet, der als zweipoliger diametral magnetisierter Scheibenmagnet auf dem stirnseitigen Wellenende der Abtriebswelle 27 befestigt ist. Das von dem Magneten 28 indizierte Magnetfeld wird von einem Magnetfeld-Encoder 29 detektiert, der zusammen mit der Motor-Kommutierungssensorik auf der Motorleiterplatte 15 angeordnet ist. Um eine Abschirmung des vom Magneten 28 erzeugten Magnetfelds gegenüber dem auf der Motorleiterplatte 15 angeordneten Magnetfeld-Encoder 29 zu vermeiden, ist in der Flanschplatte des Motorflansches 14 des Elektroantriebsmotors 9 eine Öffnung 30 vorgesehen, die axial fluchtend zur Antriebswelle 27 positioniert ist.

Die axial fluchtend zur Antriebswelle 27 in dem Motorflansch 14 angeordnete Öffnung 30 ermöglicht einen ungehinderten Durchtritt des Magnetfelds des Magneten 28 am freien Ende der Abtriebswelle 27 durch die Flanschplatte des Motorflansches 14 und damit auch eine genaue, fehlerfreie Bestimmung der Drehposition des Abtriebsteils 5. Durch die Öffnung 30 kann die vom Magnetfeld-Encoder 29 benötigte senkrechte Komponente des Magnetfelds nahezu ungehindert durch den Motorflansch 14 hindurchgehen und eine möglichst exakte Bestimmung der Drehposition des Abtriebsteils 5 ermöglichen. Für eine entsprechend hohe Genauigkeit wird als Magnetfeld-Encoder 29 ein digitaler Hallsensor in einer Ausführung als 12 Bit-Mikrochip eingesetzt, der über die kreisförmige Anordnung der Einzelsensoren die senkrechte Komponente des Magnetfelds sicher erfassen und die Winkelposition schnell berechnen kann. Neben der schnellen und genauen Bestimmung der Winkelposition lassen sich mit einem solchen 12 Bit-Mikrochip Abweichungen der Winkelposition der Abtriebswelle 27 von unter 0,1° messen und zusätzlich die Winkelposition in unterschiedlichen Datenformaten ausgeben.

Anstelle des Magneten 28 kann an dem dem Abtriebsteil 5 abgewandten freien Ende der Abtriebswelle 27 eine Massverkörperung angeordnet sein, bevorzugt eine teilkreisförmige Schicht aus einem nicht magnetischem, gut leitendem Metall, insbesondere eine dünne Kupferschicht von 0,1 bis 1,0 mm. Diese Massverkörperung wirkt auf einen induktiven Encoder der Anstelle des Magnetfeld-Encoders 29 zusammen mit der Motor-Kommutierungssensorik auf der Motorleiterplatte 15 angeordnet ist. Dabei weist der bevorzugt eingesetzte wirbelstrombasierte induktive Encoder eine Anregungsspule auf dessen Induktivität je nach Drehstellung der Abtriebswelle an der Massverkörperung verändert und von einer oder mehreren Messspulen des induktiven Encoders erfasst wird.

### Bezugszeichenliste:

- 1: Robotergelenkantrieb
- 2: stationäres Gehäuse
- 3: Gehäusedeckel
- 4: Befestigungslaschen
- 5: Abtriebsteil
- 6: Lager
- 7: Ausschnitte
- 8: Bohrungen
- 9: Elektroantriebsmotor
- 10: Feststellbremse
- 11: Aktuator
- 12: Hebelarm
- 13: Rotor
- 14: Motorflansch
- 15: Motorleiterplatte
- 16: Getriebe
- 17: Antriebswelle
- 18: Antriebsritzel
- 19: Motorlager
- 20: Zahnrad
- 21: Zahnrad
- 22: Zahnritzel
- 23: Zahnrad
- 24: Zahnritzel
- 25: Innenverzahnung
- 26: Teilhohlrad
- 27: Abtriebswelle
- 28: Magnet
- 29: Magnetfeld-Encoder
- 30: Öffnung

## Patentansprüche

1. Robotergelenkantrieb (1) mit einem stationären Gehäuse (2), einen relativ zum stationären Gehäuse (2) drehbaren Abtriebsteil (5), einem Elektroantriebsmotor (9) und einem Getriebe (16), wobei der Elektroantriebsmotor (9) eine Motorleiterplatte (15) mit einer Kommutierungssensorik aufweist und eine Antriebswelle (17) des Elektroantriebsmotors (9) über das Getriebe (16) mit einer Abtriebswelle (27) des drehbaren Abtriebsteils (5) gekoppelt ist, um das Abtriebsteil (5) relativ zum stationären Gehäuse (2) zu drehen, wobei an der Abtriebswelle (27), die sich vom Abtriebsteil (5) in das Getriebe (16) erstreckt, ein Geberelement angeordnet ist, und ein Encoder vorgesehen ist, der mittels des Geberelements die Drehposition der Abtriebswelle (27) bestimmt, und wobei das Geberelement an einem freien Ende der Abtriebswelle (27) und der Encoder in einer axialen Richtung zu der Abtriebswelle (27) auf der Motorleiterplatte (15) des Elektroantriebsmotors (9) angeordnet sind,
**dadurch gekennzeichnet, dass** die Antriebswelle (17) des Elektroantriebsmotors (9) und die Abtriebswelle (27) des Abtriebsteils (5) versetzt zueinander angeordnet sind.

2. Robotergelenkantrieb (1) nach Anspruch 1,
**dadurch gekennzeichnet, dass** das Geberelement ein Magnet (28) und der Encoder ein Magnetfeld-Encoder (29) ist, wobei der Magnetfeld-Encoder (29) mittels des Magnetfelds des Magnets (28) die Drehposition der Abtriebswelle (27) bestimmt.

3. Robotergelenkantrieb (1) nach Anspruch 2,
**dadurch gekennzeichnet, dass** der Magnetfeld-Encoder (29) ein integrierter Hallsensorchip ist.

4. Robotergelenkantrieb (1) nach Anspruch 2 oder 3,
**dadurch gekennzeichnet, dass** der Magnet (28) ein diametral magnetisierter Scheiben- oder Zylindermagnet ist.

5. Robotergelenkantrieb (1) nach Anspruch 1,
**dadurch gekennzeichnet, dass** das Geberelement eine induktionsändernde Massverkörperung und der Encoder ein induktiver Encoder ist, wobei der induktive Encoder mittels einer sich durch die Massverkörperung ändernden Induktivität die Drehposition der Abtriebswelle (27) bestimmt.

6. Robotergelenkantrieb (1) nach Anspruch 5,
**dadurch gekennzeichnet, dass** der die Massverkörperung aus einem nicht magnetischen Metall, insbesondere Kupfer oder Aluminium, besteht und der induktive Encoder ein wirbelstrombasierter induktiver Encoder ist.

7. Robotergelenkantrieb (1) nach einem der Ansprüche 1 bis 6,
**dadurch gekennzeichnet, dass** das Getriebe (16) ein Stirnradgetriebe ist, bevorzugt ein mehrstufiges Stirnradgetriebe ist.

8. Robotergelenkantrieb (1) nach Anspruch 7,
**dadurch gekennzeichnet, dass** ein mit der Abtriebswelle (27) gekoppeltes Zahnrad des Stirnradgetriebes ein Hohlrad oder ein Teilhohlrad (26) ist.

9. Robotergelenkantrieb (1) nach einem der Ansprüche 1 bis 8,
**dadurch gekennzeichnet, dass** der Elektroantriebsmotor (9) ein Außenläufermotor ist.

10. Robotergelenkantrieb (1) nach einem der Ansprüche 1 bis 9,
**dadurch gekennzeichnet, dass** die Kommutierungssensorik drei digitalen Hallsensoren zur Erfassung des Magnetfelds der Rotor-Magneten des Elektroantriebsmotors (9) aufweist.

11. Robotergelenkantrieb (1) nach einem der Ansprüche 1 bis 10,
**dadurch gekennzeichnet, dass** der Elektroantriebsmotor (9) einen antriebsseitigen Motorflansch (14) aufweist, wobei der Motorflansch (14) eine axial zur Abtriebswelle (27) fluchtende Öffnung (30) aufweist.

12. Roboter, insbesondere ein Humanoid-Roboter, mit mindestens einem Robotergelenkantrieb (1) nach einem der Ansprüche 1 bis 11, wobei ein Encoder, bevorzugt ein Magnetfeld-Encoder (29) oder ein induktiver Encoder, vorgesehen ist, der die Drehposition der Abtriebswelle (27) bestimmt, bevorzugt mittels eines am freien Ende der Abtriebswelle (27) angeordneten Geberelements.

## Claims

1. A robot joint drive (1) with a stationary housing (2), an output part (5) rotatable relative to the stationary housing (2), an electric drive motor (9) and a gear (16), wherein the electric drive motor (9) comprises a motor circuit board (15) with a commutation sensor system, and an input shaft (17) of the electric drive motor (9) is coupled via the transmission (16) to an output shaft (27) of the rotatable output member (5) to rotate the output member (5) relative to the stationary housing (2), wherein a transmitter element is arranged on the output shaft (27), which extends from the output part (5) into the transmission (16), and an encoder is provided, which determines the rotational position of the output shaft (27) by means of the transmitter element, and wherein the transmitter element is arranged on a free end of the output shaft (27) and the encoder is arranged on the motor circuit board (15) of the electric drive motor (9) in an axial direction to the output shaft (27),
**characterised in that** the input shaft (17) of the electric drive motor (9) and the output shaft (27) of the output part (5) are arranged offset to one another.

2. A robot joint drive (1) according to claim 1,
**characterised in that** the encoder element is a magnet (28) and the encoder is a magnetic field encoder (29), the magnetic field encoder (29) determining the rotational position of the output shaft (27) by means of the magnetic field of the magnet (28).

3. A robot joint drive (1) according to claim 2,
**characterised in that** the magnetic field encoder (29) is an integrated Hall sensor chip.

4. A robot joint drive (1) according to claim 2 or 3,
**characterised in that** the magnet (28) is a diametrically magnetised disc or cylinder magnet.

5. A robot joint drive (1) according to claim 1,
**characterised in that** the encoder element is an induction-altering dimensional embodiment and the encoder is an inductive encoder, the inductive encoder being controlled by an inductance changing due to the dimensional scale determines the rotational position of the output shaft (27).

6. A robot joint drive (1) according to claim 5,
**characterised in that the** measuring body consists of a non-magnetic metal, in particular copper or aluminium, and the inductive encoder is an eddy current based inductive encoder.

7. A robot joint drive (1) according to one of claims 1 to 6,
**characterised in that** the transmission (16) is a spur gear, preferably a multi-stage spur gear.

8. A robot joint drive (1) according to claim 7,
**characterised in that** a gear of the spur gear coupled to the output shaft (27) is a ring gear or a partial ring gear (26).

9. A robot joint drive (1) according to one of claims 1 to 8,
**characterised in that** the electric drive motor (9) is an external rotor motor.

10. A robot joint drive (1) according to one of claims 1 to 9,
**characterised in that** the commutation sensor system has three digital Hall sensors for detecting the magnetic field of the rotor magnets of the electric drive motor (9).

11. A robot joint drive (1) according to one of claims 1 to 10, **characterised in that** the electric drive motor (9) has a motor flange (14) on the drive side, the motor flange (14) having an opening (30) axially aligned with the output shaft (27).

12. A robot, in particular a humanoid robot, having at least one robot joint drive (1) according to one of claims 1 to 11, wherein an encoder, preferably a magnetic field encoder (29) or an inductive encoder, is provided which determines the rotational position of the output shaft (27), preferably by means of an encoder element arranged at the free end of the output shaft (27).

## Revendications

1. Entraînement (1) d'articulation de robot avec un boîtier fixe (2), une partie sortie (5) pouvant tourner par rapport au boîtier fixe (2), un moteur d'entraînement électrique (9) et un engrenage (16), dans lequel le moteur d'entraînement électrique (9) comprend une carte de circuit imprimé de moteur (15) avec un système de capteurs de commutation, et un arbre d'entrée (17) du moteur d'entraînement électrique (9) est couplé par l'intermédiaire de l'engrenage (16) à un arbre de sortie (27) de la partie sortie rotative (5) pour faire tourner la partie sortie (5) par rapport au boîtier fixe (2), dans lequel un élément émetteur est disposé sur l'arbre de sortie (27), qui s'étend de la partie sortie (5) dans la transmission (16), et un codeur est prévu, qui détermine la position de rotation de l'arbre de sortie (27) au moyen de l'élément émetteur, et dans lequel l'élément émetteur est disposé sur une extrémité libre de l'arbre de sortie (27) et le codeur est disposé sur la carte de circuit imprimé (15) du moteur d'entraînement électrique (9) dans une direction axiale par rapport à l'arbre de sortie (27),
**caractérisé en ce que** l'arbre d'entrée (17) du moteur d'entraînement électrique (9) et l'arbre de sortie (27) de la partie sortie (5) sont disposés de manière décalée l'un par rapport à l'autre.

2. Entraînement d'articulation de robot (1) selon la revendication 1,
**caractérisé en ce que** l'élément de codage est un aimant (28) et le codeur est un codeur de champ magnétique (29), le codeur de champ magnétique (29) déterminant la position de rotation de l'arbre de sortie (27) au moyen du champ magnétique de l'aimant (28).

3. Entraînement d'articulation de robot (1) selon la revendication 2,
**caractérisé en ce que** le codeur de champ magnétique (29) est une puce de capteur à effet Hall intégrée.

4. Entraînement d'articulation de robot (1) selon les revendications 2 ou 3,
**caractérisé en ce que** l'aimant (28) est un aimant en forme de disque ou de cylindre diamétralement opposé.

5. Entraînement d'articulation de robot (1) selon la revendication 1,
**caractérisé en ce que** l'élément de codage est une incarnation dimensionnelle à modification par induction et le codeur est un codeur inductif, le codeur inductif étant commandé par une modification d'inductance due à l'échelle dimensionnelle qui détermine la position de rotation de l'arbre de sortie (27).

6. Entraînement d'articulation de robot (1) selon la revendication 5,
**caractérisé en ce que le** corps de mesure est constitué d'un métal non magnétique, en particulier de cuivre ou d'aluminium, et que le codeur inductif est un codeur inductif à base de courants de Foucault.

7. Entraînement d'articulation de robot (1) selon l'une des revendications 1 à 6,
**caractérisé en ce que** la transmission (16) est un engrenage droit, de préférence un engrenage droit à plusieurs étages.

8. Entraînement d'articulation de robot (1) selon la revendication 7,
**caractérisé en ce qu'**un engrenage de l'engrenage droit couplé à l'arbre de sortie (27) est une couronne dentée ou une couronne dentée partielle (26).

9. Entraînement d'articulation de robot (1) selon l'une des revendications 1 à 8,
**caractérisé en ce que** le moteur d'entraînement électrique (9) est un moteur à rotor extérieur.

10. Entraînement d'articulation de robot (1) selon l'une des revendications 1 à 9,
**caractérisé en ce que** le système de capteurs de commutation possède trois capteurs Hall numériques pour détecter le champ magnétique des aimants du rotor du moteur d'entraînement électrique (9).

11. Entraînement (1) de l'articulation d'un robot selon l'une des revendications 1 à 10,
**caractérisé en ce que** le moteur d'entraînement électrique (9) comporte une bride de moteur (14) du côté de l'entraînement, la bride de moteur (14) présentant une ouverture (30) alignée axialement avec l'arbre de sortie (27).

12. Robot, en particulier robot humanoïde, avec au moins un entraînement d'articulation de robot (1) selon l'une des revendications 1 à 11,
**caractérisé en ce qu'**il est prévu un codeur, de préférence un codeur de champ magnétique (29) ou un codeur inductif, qui détermine la position de rotation de l'arbre de sortie (27), de préférence au moyen d'un élément de codeur disposé à l'extrémité libre de l'arbre de sortie (27).
